# EUROPEAN PATENT SPECIFICATION

(11) **EP 1 436 551 B1**
(45) Date of publication and mention of the grant of the patent: **24.01.2007**
(21) Application number: 02775919.0
(22) Date of filing: 20.09.2002
(51) Int. Cl.: F24F 1/00

(54) **AIR HANDLING SYSTEM DUCTWORK COMPONENT AND METHOD OF MANUFACTURE**
LEITUNGSSYSTEMKOMPONENTE FÜR LUFTBEHANDLUNGSSYSTEM UND HERSTELLUNGSVERFAHREN
COMPOSANT DE GAINE D'UN SYSTEME DE TRAITEMENT DE L'AIR ET PROCEDE DE FABRICATION

(30) Priority: 20.09.2001 US 324160 P; 19.09.2002 US 252032
(43) Date of publication of application: 14.07.2004
(73) Proprietor: Jungers, Jon W., Zimmerman, MN 55398 (US)
(72) Inventor: Jungers, Jon W., Zimmerman, MN 55398 (US)
(74) Representative: Roberts, Gwilym Vaughan
(86) International application number: PCT/US2002/030023
(87) International publication number: WO 2003/025472

(56) References cited:
- EP-A- 1 241 414
- US-A- 4 706 711
- US-A- 5 095 942
- US-A- 5 470 515
- US-B1- 6 176 269

## Description

### Background of the Invention

The present invention relates to ductwork components for air handling systems such as residential, commercial, or industrial heating, ventilating, and air conditioning (HVAC) systems. More particularly, it relates to an integrally formed, foam-based air handling system ductwork component(s) exhibiting superior handling and performance properties.

Residential, commercial, and industrial air handling systems include various ductwork components used to direct heated, cooled, and/or filtered air from a source to one or more rooms. More particularly, the air handling system can include a heating system (e.g., furnace, heat pump, electrical heat, etc.), cooling system (e.g., air conditioner), and/or a filtering system. Regardless of the manner in which air is treated, ductwork components direct the treated air (typically via fan(s) or blower(s)) to the room(s) of interest. The ductwork components can include one or more of a plenum (e.g., hot air plenum, cold air straight plenum, cold air plenum with furnace take-off), hot air take-offs, ducts, pipes (e.g., straight or bent), boots, wall stacks, registers (e.g., wall or floor registers), tees, reducers, etc. (hereinafter referred to as "ductwork components"). These ductwork components are traditionally formed of metal; more particular, galvanized stainless steel or sheet metal. While well accepted, stainless steel or sheet metal ductwork components are characterized by a number of potential drawbacks.

For example, metal ductwork components are not energy efficient. Heat transfer across a thickness of the component readily occurs, especially during periods of inactivity. Similarly, difficulties are often encountered when joining two separate ductwork components (e.g. a duct to a plenum; a register to a boot; etc.) due to variation in size. Along these same lines, it is virtually impossible to achieve an airtight seal between two joined ductwork components; instead, an additional sealing material (e.g. duct tape) must be employed to ensure an airtight junction. Due to the extra time required to apply this auxiliary sealant, installers operating under tight deadlines may be forced to forego their use. This failure, in turn, may lead to the introduction of unwanted molds, dust, and bacteria into the air handling system ductwork. Further, the sharp corners associated with many metal ductwork components are dangerous and may cause injuries during installation. Also, though galvanized stainless steel is quite robust, deterioration or rupturing will inevitably occur over time due in large part to corrosion.

Efforts have been made to address at least one of the above-identified concerns. Namely, a separate layer of insulation is often wrapped around pipe ductwork components to minimize undesirable heat transfer. The separately formed insulation layer(s) is expensive and entails handling difficulties and additional installation time. Alternatively, U.S. Patent No. 3,352,326 to Gustafson describes a prefabricated duct for an air conditioning system consisting of inner and outer metal tubes maintaining an intermediate fiberglass insulation material. Unfortunately, the prefabricated ducts are not adapted to retrofit existing systems. Similarly, ductboard is available that incorporates an intermediate insulation layer as described, for example, in U.S. Patent No. 5,918,644. Regardless of exact construction, ductboard is provided in a sheet or blank form, and then bent to form a duct. As such, ductboard has minimal structural strength and is limited to above ground, separately reinforced air duct applications. A further drawback common to each of the above described ductwork insulation techniques is that they are limited to only pipe and duct components. Likely due to the greatly increased costs associated with these techniques, no efforts have been made to provide other ductwork components (e.g. plenums, boots, etc) with an insulation layer.

Substantial efforts have been expended into improving the design and performance of the "major" air handling system components such as furnaces and air conditioners. However, the ductwork components are essentially unchanged, relying solely upon traditional metal fabrication. Any improvements to this metal design could revolutionize the residential, commercial, and industrial air handling system industry. Unfortunately, previous efforts have not produced commercially viable results. Therefore, a need exists for air handling system ductwork components that are integrally formed to include a layer of insulation and that can be produced on a cost effective basis.

US-A-5095942 discloses a duct having a thin plastic inner layer which is covered by an expanded foam core which is covered by a thin plastic layer.

According to the invention there is provided a ductwork and methods according to the independent claims. Optional features are set out in the dependent claims.

One aspect of the present invention relates to a ductwork component for an air handling system comprising a tubular, foam interior layer integrally formed with a thin, non-metal outer layer. The combination interior and outer layers are characterized as providing requisite strength for use of the component within an air handling system without inclusion of a metal-based layer. In one preferred embodiment, the interior layer is a closed cell foam and the outer layer is plastic. Regardless, the ductwork component can assume a wide variety of forms, such as a duct, pipe, elbow, boot, tee, register, wall stack, take-off, plenum, etc.

Another aspect of the present invention relates to a method of manufacturing a ductwork component for an air handling system. The method includes providing a foam-related material and a plastic material. The foam-related material is molded with the plastic material to form the ductwork component comprising a tubular interior foam layer and an outer plastic layer. In this regard, the molding results in the ductwork component being adapted for use in an air handling system and having requisite strength without requiring an additional metal layer. In one preferred embodiment, a rotational molding operation is used to form the ductwork component.

Another aspect of the present invention relates to a method of replacing an existing metal ductwork component of an air handling system. The method includes providing a molded, foam-based ductwork component sized and shaped to replicate a size and shape of the metal ductwork component. The metal ductwork component is removed from the air handling system. Finally, the foam-based ductwork component is mounted within the air handling system so as to replace the metal ductwork component. In this regard, the foam-based ductwork component is sufficiently rigid to maintain its position within the air handling system independent of a separate metal layer or support.

Yet another aspect of the present invention relates to ductwork for an air handling system comprising a plenum, at least one duct, and at least one register. In this regard, at least one of the plenum, duct, and register consist of a tubular, foam interior layer integrally formed with a thin, non-metal outer layer. The combination interior and outer layers are characterized as providing requisite strength for use of the component within the air handling system without inclusion of a metal-based layer.

### Brief Description of the Drawings

FIG. 1 is an exploded view of an HVAC air handling system including components in accordance with the present invention;
FIG. 2A is an enlarged, transverse, cross-sectional view of a portion of a duct of FIG. 1;
FIG. 2B is an enlarged, transverse, cross-sectional view of a portion of an alternative embodiment duct in accordance with the present invention;
FIG. 2C is a longitudinal, cross-sectional view of a duct of FIG. 1;
FIGS. 3A - 3C are perspective views of plenum ductwork components in accordance with the present invention;
FIGS. 4A and 4B are perspective views of pipe ductwork components in accordance with the present invention;
FIGS. 5A and 5B are perspective views of take-off ductwork components in accordance with the present invention;
FIGS. 6A - 6D are perspective views of boot ductwork components in accordance with the present invention; and
FIG. 7 is a perspective view of a wall stack ductwork component in accordance with the present invention.

### Detailed Description of the Preferred Embodiments

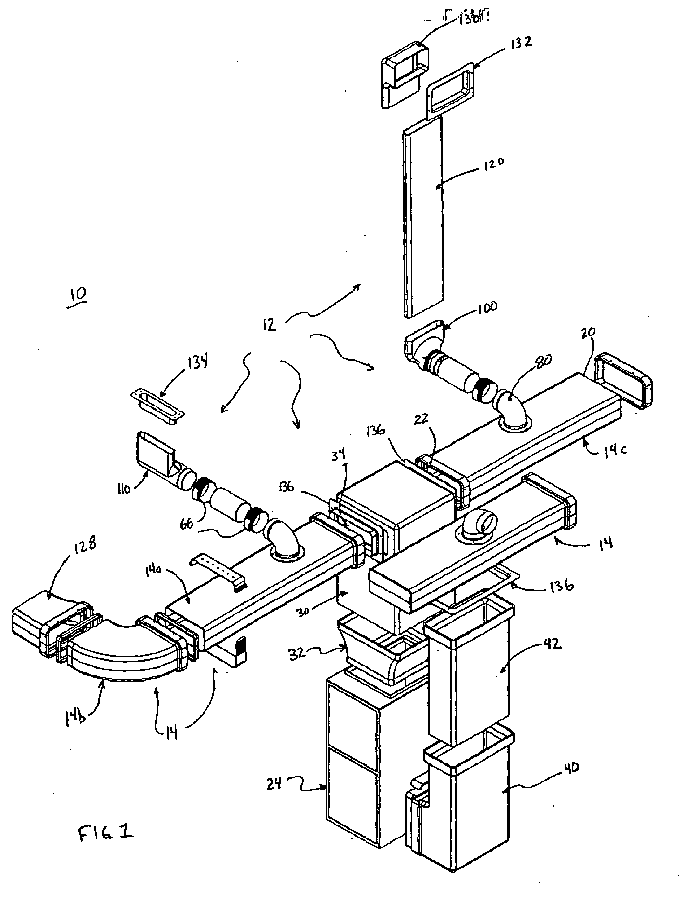

An air handling system 10 incorporating ductwork components (referenced generally at 12) in accordance with the present invention is shown in FIG. 1. In this regard, the air handling system 10 of FIG. 1 reflects but one of a multitude of possible configurations with which the present invention is useful. That is to say, air handling systems, such as the system 10 of FIG. 1, are designed to satisfy the needs of the particular residential, commercial, or industrial installation. Thus, depending upon the particular installation requirements, additional ones of the ductwork components 12 shown in FIG. 1 may be included and/or others of the ductwork components 12 eliminated. However, at least one of the ductwork components 12, preferably all of the ductwork components 12, of the particular system installation is an integrally formed, foam-based body that provides requisite structural strength and airflow handling capabilities without the requirement of a separate metal layer. The component(s) 12 in accordance with the present invention is a greatly enhanced substitute for the traditional, galvanized stainless steel or sheet metal ductwork component design that inherently requires a separately wrapped insulation material to limit heat transfer losses.

With the above in mind, an exemplary component 12 in accordance with the present invention is an air duct 14 (referenced generally in FIG. 1). In terms of overall size and shape, the duct 14 replicates ducts commonly employed in residential, commercial, or industrial air handling system applications, and thus can be straight (e.g., the duct 14a in FIG. 1) or curved (e.g., the duct 14b in FIG. 1). One example of the duct 14 is shown in greater detail by the cross-sectional view of FIG. 2A and includes an interior layer 16 and an outer layer 18. In general terms, the interior layer 16 is a molded foam, whereas the outer layer 18 is plastic. With this construction, the interior and outer layer 16, 18 are bonded to one another, with the interior, foam layer 16 providing sufficient rigidity to fully support the duct 14 within the air handling system 10.

As used throughout this specification, a "foam" or "foam material" is a lightweight cellular material resulting from the introduction of gas bubbles into a reacting polymer. With this definition in mind, the interior foam layer 16 is preferably a molded, hardened or rigid foam having a relatively high density, such as that normally associated with molded polyethylene foam as described below. These preferred foam characteristics render the interior foam layer 16 to have a high compression modulus or support factor sufficient for the duct 14 (or other ductwork component as described below) to rigidly maintain its shape over long periods of time (at least ten years) when subjected to forces normally encountered in a residential, commercial, or industrial air handling system ductwork application (e.g., the duct 14 may be buried under ground, hung from a ceiling, etc.).

In light of the above-described characteristics associated with the foam interior layer 16 (e.g., molded, rigid foam), the outer layer 18 primarily serves as protective coating or skin that maintains an integrity of the duct's 14 exterior during handling and installation. In particular, the foam interior layer 16 can be somewhat friable; the outer layer 18 limits possible crumbling or flaking of the foam interior layer 16 in the event the duct 14 accidentally contacts another hard object. Further, as described below, the outer layer 18 provides a smooth, aesthetically pleasing exterior surface for the duct 14 and/or desired color. However, the outer layer 18 need not overtly support a structural rigidity of the inner foam layer 16, and thus is a preferably thin, hardened plastic such as polyethylene. In particular, the outer layer 18 preferably has a thickness of less than 0.25 inch (6.35 mm), more preferably less than 0.125 inch (3.175 mm), most preferably less than 0.0625 inch (1.587 mm). Further, although the interior layer 16 and the outer layer 18 are depicted in FIG. 2A as being defined by a clear demarcation line, depending upon the particular manufacturing technique (e.g., rotational molding), a gradual transition from the foam interior layer 16 to the outer layer 18 can occur with the present invention. Regardless, the outer layer 18 does not include a metal, and is more dense and tougher than the foam interior layer 16.

In one preferred embodiment, the duct 14 is formed by a rotational molding (or roto-molding) technique. In general terms, rotational molding is a process in which parts are formed with heat and rotation. A mold that has been tooled to a desired shape (e.g., a duct) is placed in a rotational molding machine that provides loading, heating, and cooling areas. A pre-measured plastic resin is loaded into the mold in the machine loading area. Subsequently, the mold and resin are subjected to a source of heat to melt the plastic resin under controlled conditions. In particular, the mold is rotated bi-axially (vertically and horizontally) such that the melting resin sticks to the hot mold and evenly coats every surface thereof. The mold continues to rotate during a cooling cycle so that the resulting part retains an even wall thickness. Rotational molding has conventionally been employed to produce various plastic-only parts such as furniture and toys. With the present invention, however, it has surprisingly been found that an acceptable combination foam interior layer and plastic outer layer ductwork component can be provided via rotational molding.

In one preferred embodiment, the material used to rotational mold the duct 14 includes a plastic resin and a foaming agent. The selected plastic resin and foaming agent constituents are selected to generate the interior layer 16 as a rigid, closed cell foam and the outer layer 18 as a relatively thin, encapsulating plastic skin. In this regard, the preferred plastic resin is polyethylene, more preferably linear low-density polyethylene (LLDPE). Alternatively, other polyethylene formulations, such as high-density polyethylene (HDPE), low-density polyethylene (LDPE), etc., are acceptable. Even further, other plastic resins, such as other polyolefins, ethylene-vinyl acetate, polyvinyl chloride, polyester, nylon, polycarbonate, polyurethane, etc., can be employed. In one preferred embodiment, the plastic resin is LLDPE-based, available under the trade designation "LL8460" from ExxonMobile of Toronto, Ontario, Canada. Alternative plastic resin compounds are available, for example, from A. Schulman of Akron, Ohio, under the trade designation "LBAXL0360".

The selected foaming agent in combination with the selected plastic resin generates the foam interior layer 16 during rotational molding. With this in mind, one preferred foaming agent is available under the trade name "Celogen" from UniRoyal Chemical Company, of Hartford, Connecticut, as an activated azodicarbonamide. When heated during the molding process, the foaming agent generates a gas that is trapped inside the molten plastic and causes it to foam. The material then has porous walls that are stiffer but lighter in weight than a solid wall of the same strength.

In a preferred embodiment, the molding compound consists of a ratio of plastic resin and foaming agent as approximately 2:3 (i.e., 40% plastic resin and 60% foaming agent). This one preferred ratio has surprisingly been found to result in a molded, highly rigid yet lightweight foam interior layer in combination with a hardened, smooth, aesthetically pleasing outer layer or skin. In this regard, the foaming agent is preferably added shortly after the heating/rotation cycling has begun. With this one preferred technique, the plastic resin melts and forms the thin outer layer 18, with the subsequently added foaming agent causing foaming to occur, with this foamed layer/material being integrally formed or bonded to the outer skin layer. Alternatively, a dry blend of the plastic resin and foaming agent can be combined and placed into the mold prior to heating/rotation, resulting in an integral skin foam. Even further, assembly techniques other than rotational molding can be employed, such as laminating the outer layer 18 to a pre-formed foam interior layer 16, injection molding the layers 16, 18, etc.

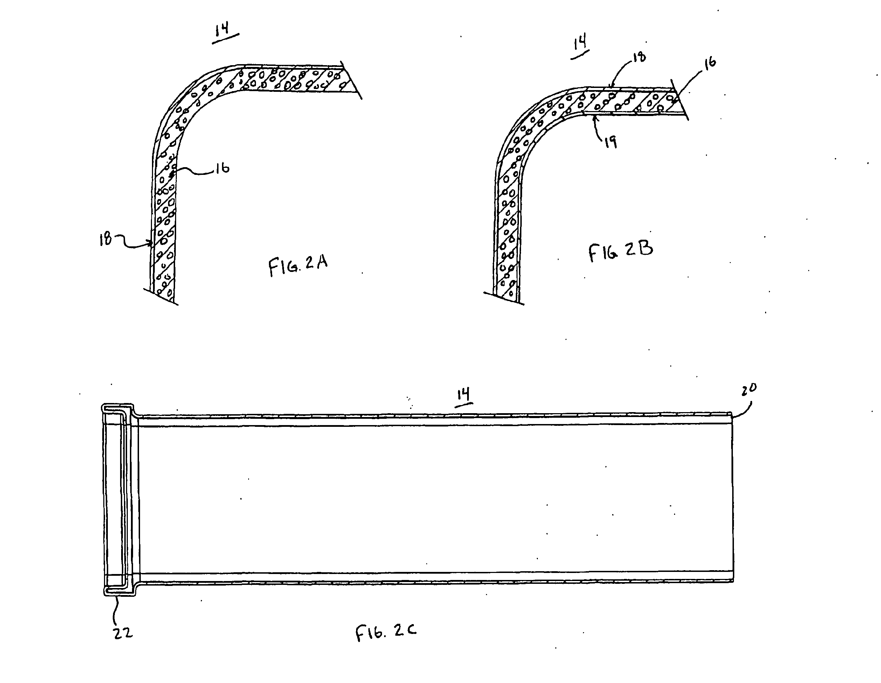

By preferably forming the interior layer 16 as a closed cell foam, a consistent interior surface is provided for directing airflow. That is to say, the interior layer 16 can be "exposed" to airflow (i.e., define the interior surface of the duct) without concern for airborne particles intimately interacting with individual cells of the foam interior layer 16 and/or air "leaking" through the foam interior layer 16. This is in direct contrast to previous rotational molded parts in unrelated fields that sandwich an insulative material between inner and outer plastic layers. However, in an alternative embodiment, the duct 14 further includes a molded inner layer 19, that in combination with the outer layer 18, encapsulates the foam interior layer 16 as shown in FIG. 2B. With this alternative approach, the interior foam layer 16 can assume other forms, such as an open cell foam.

Formulation of the molding compound can further include other additives that enhance certain characteristics of the resulting ductwork component. For example, the plastic and foaming agent components are preferably selected to provide the foam interior layer 16 with an elevated R value for enhanced insulative effects and thus be highly useful for extreme temperature applications (e.g., attic or crawl space). For example, in one preferred embodiment, the duct 14 can have an R value of eighteen or greater. Conversely, for air handling applications where an elevated R value is not a critical factor, the selected materials and/or resulting wall thickness can result in a lower R value. Additionally, a flame retardant additive can be employed.

Also, a desired colorant or pigment additive can be used to produce a desired exterior color for the duct 14. Any heat stable and unreactive colorants known and available for use with the selected plastic resin (and foaming agent with the preferred rotational molding technique) can be employed. Illustrative examples of useful colorants include carbon black, quinaeridone red, anthraquinone, and perinone dyes to name but a few. The resulting ductwork component (such as the duct 14) can thus be virtually any color, such as black, red, yellow, brown, etc. Other optional additives include fillers, tackifying agents, dispersing agents, UV stabilizers, and/or antioxidants.

Returning to FIG. 1, the molded duct 14 preferably defines a male end 20 and a female end 22. The female end 22 is an outwardly extending flange sized to directly receive a male end of a separate ductwork component as described in greater detail below. Further, the male end 20 and the female end 22 are precisely formed to provide an airtight seal when a separate ductwork component is mounted thereto. As best shown in FIG. 2C, the female end 22 defines an inner cross-sectional area greater than an inner cross-sectional area of the male end 20. More particularly, the inner dimensions of the female end 22 correspond with the outer dimensions of the male end 20. This represents a distinct advancement over current sheet metal ductwork components that require separate coupler components to assemble two ductwork pieces, along with a sealant to achieve an airtight seal. In this regard, the preferred rotational molding technique defines a smooth transition to the flanged female end 22. That is to say, the sharp corners associated with sheet metal ducts are eliminated with the present invention, thereby minimizing the opportunity for injury when handling the duct 14.

Others of the ductwork components 12 are described in greater detail below. As a general statement, each of these components 12 is preferably identical in construction to the duct 14 described above, though different in shape and size. More particularly, each of the ductwork components 12 described below are provided as integrally formed tubular bodies consisting of a rigid, interior foam layer and an outer non-metal, preferably plastic, layer. In this regard, each of the ductwork components 12 described below are preferably rotational molded parts, having a closed cell interior foam layer that defines an interior surface of the particular component.

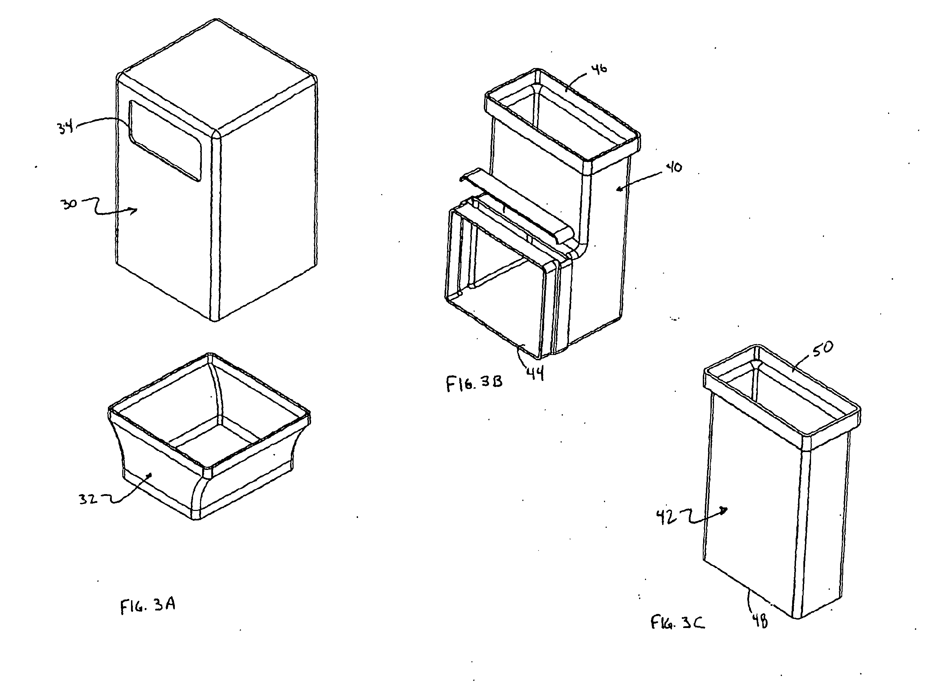

With additional reference to FIG. 3A, another of the ductwork components 12 of the present invention includes a hot air plenum 30. As is known in the art, the hot air plenum 30 is used to direct air from an air source 24 (shown in FIG. 1 as a heater or furnace) to other ductwork components. In this regard, the hot air plenum 30 is commonly used in combination with a hot air take-off component 32 that is also preferably provided in accordance with the present invention. Both the hot air plenum 30 and the hot air take-off 32 are preferably sized for assembly as shown in FIG. 1, with the hot air plenum 30 having a bottom opening (not shown) that is fluidly connected to the hot air take-off 32. Further, the hot air plenum 30 defines one or more duct openings 34 (one of which is shown in FIGS. 1 and 3A) that are preferably cut into the hot air plenum 30 following the above described rotational molding process. Regardless, all exposed corners of the hot air plenum 30 and the hot air take-off 32 are rounded so to minimize the potential for handling injuries, as well as enhancing an aesthetic appearance of the components 30, 32.

In addition to the hot air plenum 30, the ductwork component 12 of the present invention can include a cold air plenum/take-off 40 or a cold air straight plenum 42 as shown in greater detail in FIGS. 3B and 3C, respectively. The cold air plenum/take-off 40 includes a first, male end 44 adapted for fluid connection to the air source 24 and a second, female end 46 adapted to receive a corresponding end of the cold air straight plenum 42 in an airtight relationship. Once again, the female end 46 is an integrally formed, outwardly extending flange with no sharp corners. The cold air straight plenum 42 similarly includes a male end 48 and a female end 50. The male end 48 is sized to be directly received within the female end 46 of the cold air plenum/take-off 40. Conversely, the female end 50 is adapted for direct coupling to other ductwork components, such as the duct 14a identified in FIG. 1.

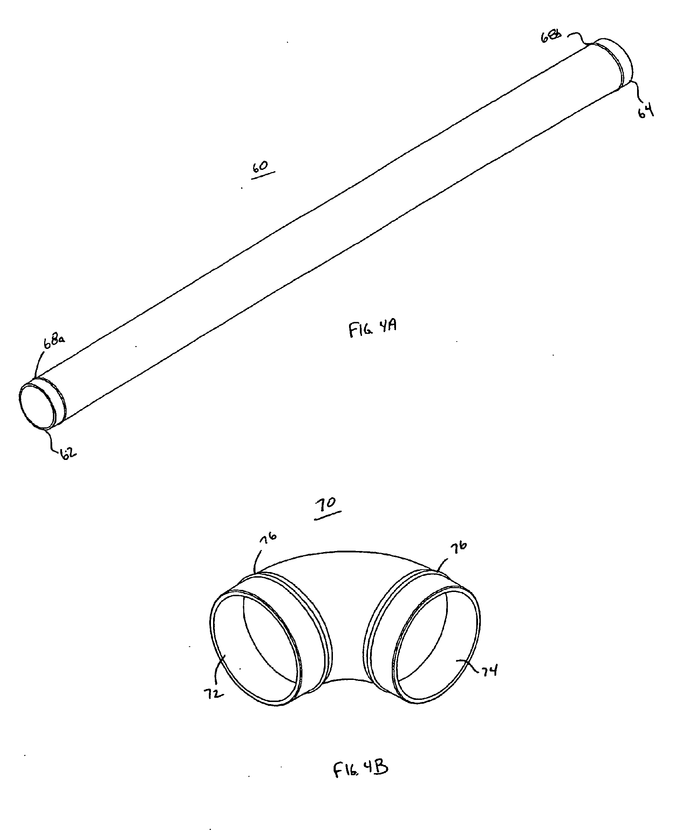

Additional ductwork components include straight pipes, an exemplary one of which is shown at 60 at FIG. 4A. Once again, the straight pipe 60 is an integrally formed, molded foam-based part defining opposing male ends 62, 64. Either of the male ends 62, 64 can be coupled to a corresponding female end of a separate ductwork component, or can be fluidly secured to a separate ductwork component via a ring clamp 66 (FIG. 1) that can be a known metal ring clamp commonly used in the HVAC industry. Alternatively, the pipe 60 can integrally form one of the ends 62, 64 as a female end (i.e., enlarged inner diameter) sized to receive the male end of a separate ductwork component. The straight pipe 60 can assume a wide variety of lengths. In a further preferred embodiment, the pipe 60 includes integrally formed, annular ribs 68a, 68b adjacent the ends, 62, 64, respectively. The annular ribs 68a, 68b provide a stop surface for mounting of the straight pipe 60 to a separate ductwork component. For example, as the male end 62 is inserted into a female end of the separate ductwork component, the annular rib 68a will contact the female end and prevent further insertion, thereby ensuring that a desired length of the pipe 60 is with the separate ductwork component. Similarly, where a ring clamp 66 is employed, the annular ribs 68a, 68b define a location point for the ring clamp 66 relative to the end 62, 64 being coupled.

Additionally, though not specifically shown in FIG. 1, the ductwork components 12 in accordance with the present invention can include a curved pipe 70 as shown in FIG. 4B. The curved pipe 70 is preferably molded to define opposing male ends 72, 74. Alternatively, one of the ends 72 or 74 can form a female end as previously described. In a further preferred embodiment, the molded, curved pipe 70 includes an integrally formed, annular rib 76 adjacent each of the ends 72, 74. Regardless, the curved pipe 70 can be formed to assume a wide variety of bend angles commonly utilized in the HVAC industry, for example, 22.5°, 45°, or 90°.

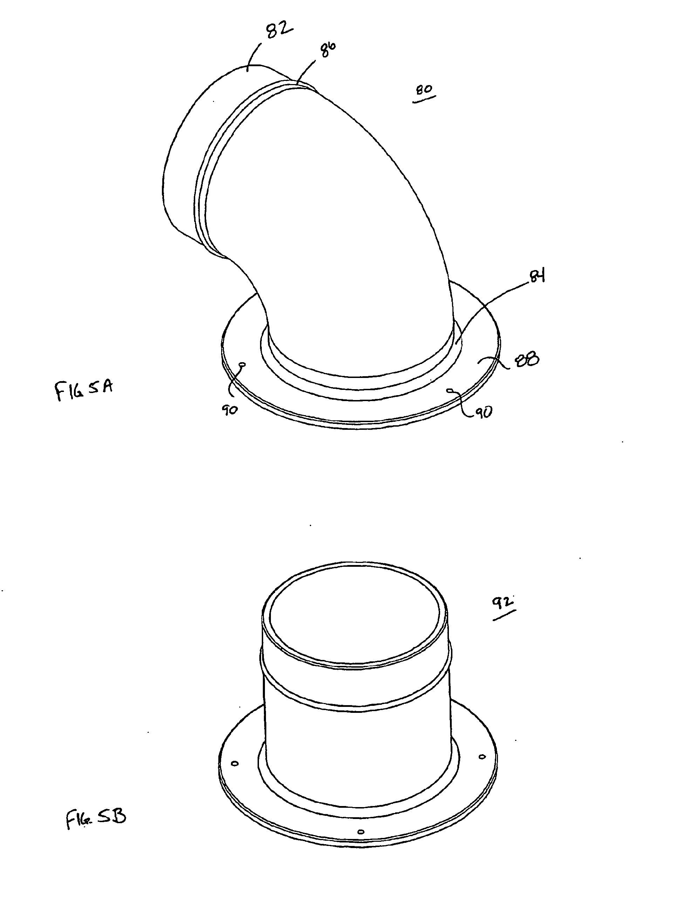

Yet another ductwork component 12 in accordance with the present invention is a curved duct take-off component 80 as shown in greater detail in FIG. 5A. The curved duct take-off 80 is employed to define an airflow branch off of a duct (such as the duct 14c in FIG. 1). With this in mind, the curved duct take-off 80 integrally defines a male end 82 and a female end 84. Further, an annular rib 86 is preferably integrally molded adjacent the male end 82. The female end 84 includes an enlarged, outwardly extending flange 88 into which several holes 90 are formed following the molding operation. Screws or other available fastening components project through the holes 90 to fasten the flange 88, and thus the take-off 80, to the duct 14c. The curved duct take-off 80 can be formed to assume a wide variety of bend angles, but is preferably a 90° bend. Alternatively, a straight duct take-off 92 can be provided as shown in FIG. 5B.

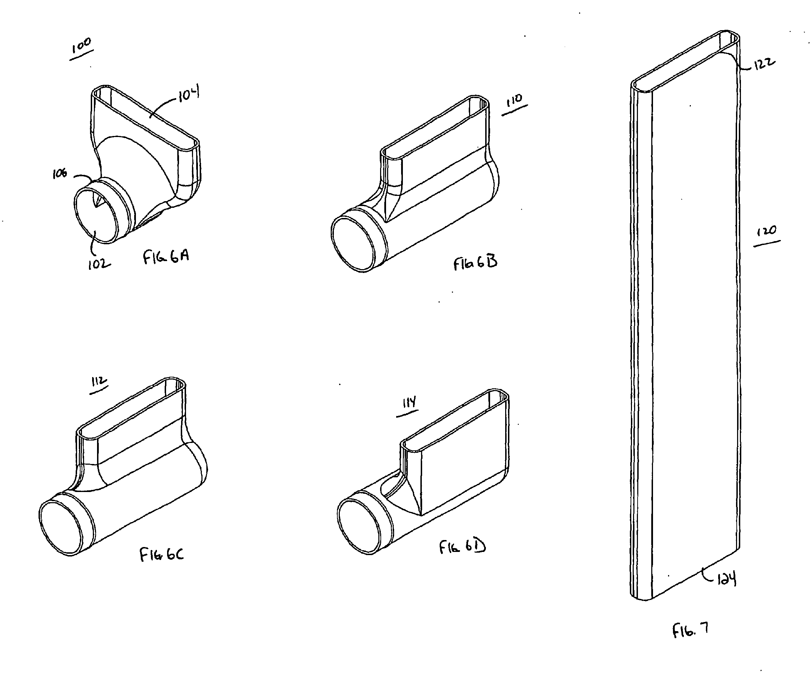

Yet another ductwork component 12 in accordance with the present invention is a boot, such as a 90° floor boot 100 shown in greater detail in FIG. 6A. The 90° floor boot 100 is similar to conventional HVAC floor boots in terms of size and shape, but is an integrally molded, foam-based component. In this regard, the 90° floor boot 100 integrally forms a pipe end 102 and a stack end 104, and preferably includes an annular rib 106 adjacent the pipe end 102. The stack end 104 is sized for coupling to a corresponding ductwork component (such as a wall stack or register as described below). Alternatively, the stack end 104 can define a female end sized to directly receive a male end of the corresponding ductwork component. Alternative boot constructions in accordance with the present invention include a straight floor boot 110 (FIG. 6B), a left hand floor boot 112 (FIG. 6C), and a right hand floor boot 114 (FIG. 6D).

Yet another ductwork component 12 in accordance with the present invention is a wall stack 120, shown in greater detail in FIG. 7. The wall stack 120 integrally forms opposing male ends 122, 124. The male ends 122, 124 are sized to be directly received, in an airtight relationship, within the female end of a corresponding boot where provided. Alternatively, a coupler device (not shown in FIG. 1) can be employed where the boot does not include a female stack end.

Returning to FIG. 1, other ductwork components 12 available with the present invention include a reducer 128, a wall register 130, a wall register coupler 132, a floor register coupler 134, and plenum duct couplers 136. Additionally, the ductwork components 12 can include components not specifically illustrated in FIG. 1 but commonly used as air handling system ductwork, such as tees, elbows, etc.

### Examples

Ductwork components in accordance with the present invention were produced. In particular, 8" x 16" five-foot ducts, 16" x 14" reducers, and 6" 90° take-offs ductwork components were rotational molded at Custom Roto-Mold, Inc. of Benson, Minnesota, using a customized rotational molding machine manufactured by Ferry Industries, Inc., of Stow, Ohio. For each of the ductwork components, an appropriately sized and shaped mold was formed and mounted within the rotational molding machine. A LLDPE resin available under the trade designation "LL8460" from ExxonMobile of Toronto, Ontario, Canada, was loaded into the mold, and the rotational molding machine operated (e.g., heated and bi-axially rotated) for approximately 10 minutes, resulting in a thin layer of LLDPE being formed along the mold wall. Cycling of the rotational molding machine was then stopped, and a foaming agent, available under the trade name "Celogen" from UniRoyal Chemical Company, of Hartford, Connecticut, was dispensed into the mold. The ratio of foaming agent:LLDPE was 3:2. Operation of the rotational molding machine was then resumed for approximately 40 minutes, including a cooling cycle. The resulting ductwork component was removed from the mold.

Each of the ducts, reducers and 90° take-offs produced above included a rigid, closed cell foam interior layer. Each ductwork component was properly sized for use in an air handling system, and exhibited minimal heat transfer. All exterior surfaces were highly smoothed, and readily resisted scratching or other forms of deterioration.

As should be evident from the above, the present invention is in no way limited to circular pipes. Instead, virtually any ductwork component is available with the present invention. In a preferred embodiment, all major ductwork of a particular air handling system is comprised of components provided in accordance with the present invention. During assembly, the precisely defined male and female ends of the respective components are easily and directly joined to one another and produce an airtight fitting without the requirement of a separate sealing material. Of course, some installation layouts may require modification of one or more of the ductwork components 12, such as, for example, creating a hole through one of the ducts 14 to facilitate fluid coupling to another component, such as a take-off. Alternatively, however, one or more of the ductwork components can be of a conventional type (i.e., sheet metal), with the corresponding ductwork component in accordance with the present invention being easily joined thereto (e.g., a floor boot in accordance with the present invention being assembled to a metal straight pipe). Even further, ductwork components in accordance with the present invention can be used to retrofit an existing system. For example, an existing air handling system can include a number of different ductwork components, each formed of conventional sheet metal or galvanized steel. In the event that a particular ductwork component requires replacement (e.g., a floor boot has been damaged or otherwise deteriorated), the existing, metal boot is simply removed and replaced with the integrally molded, foam insulated boot in accordance with the present invention.

In light of the above, the present invention provides a marked improvement over previous designs. Ductwork components in accordance with the present invention represent a significant improvement over conventional, metal designs. There is no need for additional insulation to be applied during an installation procedure, as the foam interior layer is highly energy efficient. Further, the preferred rotational molding technique renders the resulting ductwork component smooth, with rounded corners. The ductwork components are non-toxic, non-allergenic, and water resistant. Further, the precise dimensional characteristic of each component are such that a sealed relationship is achieved upon joining two components, eliminating the need for duct tape or other sealant materials.

Although the present invention has been described with reference to preferred embodiments, workers skilled in the art will recognise that changes can be made in form and detail without departing from the scope of the present invention as defined in the accompanying claims.

## Claims

1. A ductwork component (12) for a residential, commercial or industrial air handling system, the ductwork component comprising a tubular, rigid foam first layer (16) integrally formed with a thin non-metal second layer (18), the the foam first layer providing requisite strength for use of the component within an air handling system without inclusion of a metal-based layer, the ductwork component (12) being **characterised by** the absence of a clear line of demarcation between the foam layer and the non-metal layer.

2. The ductwork component of claim 1, wherein the ductwork component is formed as a component body selected from the group consisting of a duct (14), pipe (60, 70), elbow, boot (100), tee, reducer (128), coupling (134), legister (130), wall stack (120), take-off (32) and plenum; and preferably wherein the ductwork component is an HVAC floor boot (110, 112, 114).

3. The ductwork component of claim 1, wherein the foam layer (16) includes a closed cell foam; preferably wherein the closed cell foam is a molded polyethylene foam; and preferably wherein the closed cell foam is a molded linear low-density polyethylene foam.

4. The ductwork component of claim 1, wherein the second layer (18) is plastic; and preferably wherein the second layer is linear low-density polyethylene.

5. The ductwork component of claim 1, wherein the second layer (18) has a thickness of not greater than 3mm (0.125 inch).

6. The ductwork component of claim 1, wherein the component defines a female end (22) configured for air tight mating with an existing, metal-based air handling system ductwork component.

7. The ductwork component of claim 1, wherein the first (16) and second (18) layers are molded to one another; and preferably (a) wherein the first and second layers are rotational molded to one another and/or (b) wherein the first and second layers are injection molded to one another.

8. The ductwork component of claim 1, wherein the foam layer (16) defines an innermost surface of the ductwork component.

9. The ductwork component of claim 1, further comprising a thin, non-metallic layer (19) integrally formed along an inner surface of the foam layer (16).

10. A method of manufacturing a ductwork component (12) for a residential, commercial, or industrial air handling system, the method comprising:
providing a foam-related material;
providing a plastic material; and
molding the foam-related material and the plastic material to form the ductwork component comprising a tubular first foam layer (16) integrally formed with a plastic second layer (18);
wherein the step of molding results in the ductwork component being adapted for use in an air handling system and having a requisite strength without requiring an additional metal layer; **characterised by** the molding resulting in a gradual transition from the foam layer to the plastic layer.

11. The method of claim10, wherein the step of molding includes forming a component body replicating a shape of a ductwork device selected from the group consisting of a duct (14), pipe (60, 70), elbow, boot (100), tee, reducer (128), coupling (134), register (130), wall stack (120), take-off (132) and plenum (30); and preferably wherein the ductwork component is a plenum.

12. The method of claim 10, wherein the step of molding includes rotational molding the foam-related and plastic materials.

13. The method of claim 12, wherein the step of providing a foam-related material includes providing a foaming agent; preferably further comprising the step of combining the foaming agent and the plastic material as part of the step of rotational molding the materials; and preferably wherein rotational molding the materials includes: loading a rotational mold with a plastic material; initiating a rotational molding operation by heating and rotating the mold; and adding the foaming agent prior to completion of the rotational molding operation.

14. The method of claim 12, wherein the step of providing a plastic material includes providing a polyethylene resin; and preferably wherein the polyethylene resin is a linear low-density polyethylene resin.

15. The method of claim 12 wherein the step of rotational molding includes formulating a molding composition consisting of approximately 60% of the foam-related material and approximately 40% of the plastic material.

16. The method of claim 10, wherein the step of molding includes: forming the plastic material as an outer layer (18); and injection molding the foam-related material to an interior of the outer layer.

17. The method of claim 10, wherein the outer layer (18) has a thickness of not greater than 3mm (0.125 inch).

18. The method of claim10, wherein the foam layer (16) is a closed cell foam.

19. The method of claim 10, further comprising:
providing a mold shaped to replicate a shape of a known air handling system component; and
molding the ductwork component within the mold.

20. A method of replacing an existing metal ductwork component of an air handling system, the method comprising:
providing an integrally formed, foam-based ductwork (12) component as claimed in anyone of claims 1 to 9 and sized and shaped to replicate a size and shape of the existing component; removing the existing metal ductwork component from the air handling system;
and mounting the foam-based ductwork component within the air handling system to replace the existing metal ductwork component.

21. The method of claim 20, wherein the metal ductwork component and the foam-based ductwork component are selected from the group consisiting of a duct (14), pipe (60, 70), elbow (100), boot, tee, reducer (128), coupling (134), register (130), wall stack (120), take-off (32), and plenum (30); and preferably wherein the metal ductwork component and the foam-based ductwork component are a register.

22. An air handling system including an air source and ductwork comprising at least one duct, at least one boot, and at least one register, wherein at least one of the duct, boot and register are provided in accordance with claim 1; and preferably wherein each of the duct, boot and register are provided in accordance with claim 1.

## Patentansprüche

1. Leitungssystemkomponente (12) für ein Luftbchandlungssystem für Wohnung, Gewerbe und Industrie, wobei die Leitungssystemkomponente eine röhrenförmige erste Flartschaumschicht (16) umfasst, die integral mit einer dünnen nichtmetallischen zweiten Schicht (18) gebildet ist, wobei die erste Schicht für die notwendige Festigkeit für die Verwendung der Komponente in einem Luftbehandlungssystem ohne Einschluss einer auf Metall basierenden Schicht sorgt, wobei die Leitungssystemkomponente (12) **gekennzeichnet ist durch** das Fehlen einer klaren Abgrenzung zwischen der Schaumschicht und der nichtmetallischen Schicht.

2. Leitungssystemkomponente nach Anspruch 1, wobei die Leitungssystemkomponeate als Komponentenkörper geformt ist, der aus der Gruppe bestehend aus Rohrleitung (14), Rohr (60, 70), Knje, Manschette (100), T-Stück, Reduzierstück (128). Kupplung (134), Register (130), Wandschornstein (120), Abzug (32) und Plenumkammer ausgewählt ist und wobei die Leitungssystemkomponente vorzugsweise eine Heizungs-, Lüftungs-Klimaaniagen [HVAC]-Fußbodenmanschette (110, 112, 114) ist.

3. Leitungssystemkomponente nach Anspruch 1, wobei die Schaumschicht (16) einen geschlossenzelligen Schaumstoff aufweist, wobei vorzugsweise der geschlossenzellige Schaumstoff ein geformter Polyethylen-Schaumstoff ist und wobei vorzugsweise der geschlossenzellige Schaumstoff ein geformter Schaumstoff aus linearem Polyethylen niedriger Dichte ist.

4. Leitungssystemkomponente nach Anspruch 1, wobei die zweite Schicht (18) ein Kunststoff ist und die zweite Schicht vorzugsweise ein lineares Polyethylen niedriger Dichte ist.

5. Leitungssystemkomponente nach Anspruch 1, wobei die zweite Schicht (18) eine Starke von nicht mehr als 3 mm (0,125 Zoll) besitzt.

6. Leitungssystemkomponente nach Anspruch 1, wobei die Komponente eine Endbuchse (22) abgrenzt, die zur luftdichten Verbindung mit einer vorhandenen metallischen Leitungssystemkomponente eines Luftbehandlungssystems ausgelegt ist.

7. Leitungssystemkomponente nach Anspruch 1, wobei die erste (16) und die zweite (18) Schicht aneinander angeformt sind und vorzugsweise (a) die erste und zweite Schicht rotationsförmig aneinander angeformt sind und/oder (b) die erste und zweite Schicht durch Spritzgießen aneinander angeformt sind.

8. Leitungssystemkomponente nach Anspruch 1, wobei die Schaumstoffschicht (16) eine innerste Oberfläche der Leitungssystemkomponente begrenzt.

9. Leitungssystemkomponente nach Anspruch 1, die weiters eine dünne metallische Schicht (19) aufweist, welche integral auf einer Innenfläche der Schaumstoffschicht (16) gebildet ist.

10. Verfahren zur Herstellung einer Leitungssystemkomponente (12) für ein Luftbehandlungssystem für Wohnung, Gewerbe und Industrie, wobei das Verfahren folgendes aufweist:
Bereitstellung eines schaumstoffartigen Materials,
Bereitstellung eines Kunststoffmaterials und
Formen des schaumstoffartigen Materials und des Kunststoffmaterials zur Bildung der Leitungssystemkomponente, die eine röhrenförmige erste Schaumstoffschicht (16) aufweist, welche integral mit einer zweiten Schicht (18) aus Kunststoff geformt ist,
wobei der Schritt der Formung zu der Leitungssystemkomponente führt, die für die Verwendung in einem Lujnbehanditmgssyatem ausgelegt ist und die notwendige Festigkeit besitzt, ohne eine zusätzliche Metallschicht zu erfordern, **dadurch gekennzeichnet, dass** die Formung zu einem allmählichen Übergang von der Schaumstoffschicht zur Kunststoffschicht führt.

11. Verfahren nach Anspruch 10, wobei der Formungsschritt die Formung eines Komponentenkörpers aufweist, der eine Form einer Leitungssystemkomponentenvorrichtung nachbildet, welche aus der Gruppe bestehend aus Rohrleitung (14), Rohr (60, 70), Knie, Manschette (100), T-Stück, Reduzierstück (128), Kupplung (134), Register (130), Wandschomstein (120), Abzug (32) und Plenumkammer (30) gewählt wird und die Leitungssystemkomponente vorzugsweise eine Plenumkammer ist.

12. Verfahren nach Anspruch 10, wobei der Schritt der Formung die Rotationsformung des schaumstoffartigen und des Kunststoffmaterials aufweist.

13. Verfahren nach Anspruch 12, wobei der Schritt der Bereitstellung eines schaumstoffartigen Materials die Bereitstellung eines Schatunerzeugnngsmittels enthält; wobei er weiters vorzugsweise den Schritt des Kombinierens des Schaumerzeugungsmittels und des Kunststoffmaterials als Teil des Schrittes der Rotationsfarmung der Materialien aufweist, und wobei vorzugsweise die Rotationsformung der Materialien folgendes aufweist: Laden der Rotationsform mit einem Kunststoffmaterial; Einleiten des Rotationsformungsschrittes durch Erwärmen und Drehen der Form; und Hinzufügen des Schaumeizeugungsnnttels vor dem Abschluss der Arbeit der Rotationsformung.

14. Verfahren nach Anspruch 12, wobei der Schritt der Bereitstellung eines Kunststoffinaterials die Bereitstellung eines Polyethylenharzes aufweist und das Polyethyleultarz vorzugsweise ein lineares Polyethylenharz niedriger Dichte ist.

15. Verfahren nach Anspruch 12, wobei der Schritt der Rotationsformung die Formulierung einer Formungszusammensetzung aufweist, die aus ca. 60 % des schaumstoffartigen Materials und ca. 40 % des Kunststoffinaterials besteht.

16. Verfahren nach Anspruch 10, wobei der Schritt der Formung folgendes aufweist: Formung des Kunststoffmaterials als Außenschicht (18) und Spritzgießen des schaumstoffartigen Materials als Innenseite der Außenschicht.

17. Verfahren nach Anspruch 10, wobei die äußere Schicht (18) eine Stärke von nicht mehr als 3 mm (0,125 Zoll) besitzt.

18. Verfahren nach Anspruch 10, wobei die Schaumstoffschicht (16) ein geschlosseurelliger Schaumstoff ist.

19. Verfahren nach Anspruch 10, das weiters folgendes aufweist:
Bereitstellung einer Gussform, die die Form einer bekannten Luftbchandlungssystemkomponente nachbildet, und
Formen der Leitungssystemkomponente in der Gussform.

20. Verfahren zum Ersetzen einer vorhandenen metallischen Leitungssystemkomponente eines Luftbebandlungssystems, wobei das Verfahren folgendes umfasst:
Bereitstellung einer integral geformten, auf einem Schaumstoff basierenden Komponente eines Leitungssystems (12) nach einem vorhergehenden Ansprüche 1 bis 9, die so dimensioniert und geformt ist, dass sie die Größe und Form der vorhandenen Komponente nachbildet; Entfernen der vorhandenen metallischen Leitungssystemkomponente aus dem Luftbehandlungssystem und Montage der auf einem Schaumstoff beruhenden Leitungssystemkomponente im Luftbehandlungssystem, um die vorhandene metallische Leitungssystemkomponente zu ersetzen.

21. Verfahren nach Anspruch 20, wobei die metallische Leitungssystemkomponente und die auf einem Schaumstoff beruhende Leitungssystemkomponente aus der Gruppe bestehend aus Rohrleitung (14), Rohr (60, 70), Knie, Manschette (100), T-Stück, Reduzierstück (128), Kupplung (134), Register (130), Wandschornstein (120), Abzug (32) und Plenumkammer (30) gewählt wird und die metallische Leitungssystemkomponente und die auf einem Schaumstoff basierende Leitungssystemkomponente Register sind.

22. Luftbehandlungssystem, das eine Luftquelle und ein Leitungssystem aufweist, welches mindestens eine Rohrleitung, mindestens eine Manschette und mindestens ein Register enthält, wobei mindestens eine Rohrleitung, eine Manschette und ein Register nach Anspruch 1 vorgesehen ist und vorzugsweise jede Rohrleitung, Manschette und Register nach Anspruch 1 vorgesehen ist.

## Revendications

1. Composant de gaine (12) pour un système de traitement d'air résidentiel, commercial ou industriel, le composant de gaine comprenant une première couche (16) de mousse rigide tubulaire formée d'un seul tenant avec une seconde couche non métallique mince (18), la première couche de mousse offrant la résistance requise pour une utilisation du composant dans un système de traitement d'air sans inclure une couche à base de métal, le composant de gaine (12) étant **caractérisé par** l'absence d'une ligne de démarcation claire entre la couche de mousse et la couche non métallique.

2. Composant de gaine selon la revendication 1, dans lequel le composant de gaine se présente sous la forme d'un corps de composant choisi dans le groupe constitué d'un conduit (14), d'un tube (60, 70), d'un coude, d'une botte (100), d'une pièce en T, d'un réducteur (128), d'un accouplement (134), d'un registre (130), d'une cheminée murale (120), d'un extracteur (32) et d'un plénum; et, de préférence, dans lequel le composant de gaine est une botte de sol HVAC (110, 112, 114).

3. Composant de gaine selon la revendication 1, dans lequel la couche de mousse (16) comprend une mousse à cellules fermées; de préférence, dans lequel la mousse à cellules fermées est une mousse de polyéthylène moulée; et, de préférence, dans lequel la mousse à cellules fermées est une mousse moulée de polyéthylène linéaire de basse densité.

4. Composant de gaine selon la revendication 1, dans lequel la seconde couche (18) est un matériau synthétique; et, de préférence, dans lequel la seconde couche est du polyéthylène linéaire de basse densité.

5. Composant de gaine selon la revendication 1, dans lequel la seconde couche (18) a une épaisseur ne dépassant pas 3 mm (0,125 pouce).

6. Composant de gaine selon la revendication 1, dans lequel le composant définit une extrémité femelle (22) configurée pour s'adapter de manière étanche à l'air avec un composant de gaine à base de métal d'un système de traitement d'air existant.

7. Composant de gaine selon la revendication 1, dans lequel les première (16) et seconde (18) couches sont moulées l'une sur l'autre; et, de préférence, (a) dans lequel les première et seconde couches sont moulées par rotation l'une sur l'autre et/ou (b) dans lequel les première et seconde couches sont moulées par injection l'une sur l'autre.

8. Composant de gaine selon la revendication 1, dans lequel la couche de mousse (16) définit une surface intérieure du composant de gaine.

9. Composant de gaine selon la revendication 1, comprenant en outre une couche non métallique mince (19) formée d'un seul tenant le long d'une surface interne de la couche de mousse (16).

10. Procédé de fabrication d'un composant de gaine (12) pour un système de traitement d'air résidentiel, commercial ou industriel, le procédé comprenant :
la mise en oeuvre d'un matériau apparenté à de la mousse;
la mise en oeuvre d'un matériau synthétique; et
le moulage du matériau apparenté à de la mousse et du matériau synthétique pour former le composant de gaine comprenant une première couche de mousse tubulaire (16) formée d'un seul tenant avec une seconde couche de matériau synthétique (18);
dans lequel l'étape de moulage fait que le composant de gaine est adapté à une utilisation dans un système de traitement d'air et a une résistance requise sans nécessiter de couche de métal supplémentaire; **caractérisé par le fait que** le moulage provoque une transition graduelle entre la couche de mousse et la couche de matériau synthétique.

11. Procédé selon la revendication 10, dans lequel l'étape de moulage comprend la formation d'un corps de composant répliquant une forme d'un dispositif de gaine choisi dans le groupe constitué d'un conduit (14), d'un tube (60, 70), d'un coude, d'une botte (100), d'une pièce en T, d'un réducteur (128), d'un accouplement (134), d'un registre (130), d'une cheminée murale (120), d'un extracteur (132) et d'un plénum (30); et, de préférence, dans lequel le composant de gaine est un plénum.

12. Procédé selon la revendication 10, dans lequel l'étape de moulage comprend un moulage par rotation du matériau apparenté à de la mousse et du matériau synthétique.

13. Procédé selon la revendication 12, dans lequel l'étape de mise en oeuvre d'un matériau apparenté à de la mousse comprend un agent moussant; de préférence comprenant en outre l'étape de combinaison de l'agent moussant et du matériau synthétique en tant que partie de l'étape de moulage par rotation des matériaux; et, de préférence, dans lequel le moulage par rotation des matériaux comprend : le chargement d'un moule rotatif par un matériau synthétique; le lancement d'une opération de moulage par rotation en chauffant et en faisant tourner le moule; et l'addition de l'agent moussant avant que ne se termine l'opération de moulage par rotation.

14. Procédé selon la revendication 12, dans lequel l'étape de mise en oeuvre d'un matériau synthétique comprend la mise en oeuvre d'une résine de polyéthylène; et, de préférence, dans lequel la résine de polyéthylène est une résine de polyéthylène linéaire de basse densité.

15. Procédé selon la revendication 12, dans lequel l'étape de moulage par rotation comprend la formulation d'une composition de moulage constituée d'environ 60% de matériau apparentée à de la mousse et d'environ 40% du matériau synthétique.

16. Procédé selon la revendication 10, dans lequel l'étape de moulage comprend : la formation du matériau synthétique comme couche externe (18); et le moulage par injection du matériau apparenté à de la mousse à l'intérieur de la couche externe.

17. Procédé selon la revendication 10, dans lequel la couche externe (18) a une épaisseur ne dépassant pas 3 mm (0,125 pouce).

18. Procédé selon la revendication 10, dans lequel la couche de mousse (16) est une mousse à cellules fermées.

19. Procédé selon la revendication 10, comprenant en outre la mise en oeuvre d'un moule façonné pour répliquer une forme d'un composant de système de traitement d'air connu; et le moulage du composant de gaine à l'intérieur du moule.

20. Procédé de remplacement d'un composant de gaine en métal existant d'un système de traitement d'air, le procédé comprenant :
la mise en oeuvre d'un composant de gaine (12) à base de mousse formé d'un seul tenant selon l'une quelconque des revendications 1 à 9 et dimensionné et façonné pour répliquer les dimensions et la forme du composant existant; le retrait du composant de gaine de métal existant du système de traitement d'air; et le montage du composant de gaine à base de mousse à l'intérieur du système de traitement d'air pour remplacer le composant de gaine de métal existant.

21. Procédé selon la revendication 20, dans lequel le composant de gaine de métal et le composant de gaine à base de mousse sont choisis dans le groupe constitué d'un conduit (14), d'un tube (60, 70), d'un coude (100), d'une botte, d'une pièce en T, d'un réducteur (128), d'un accouplement (134), d'un registre (130), d'une cheminée murale (120), d'un extracteur (32) et d'un plénum (30); et, de préférence, dans lequel le composant de gaine de métal et le composant de gaine à base de mousse constituent un registre.

22. Système de traitement d'air comprenant une source d'air et une gaine comprenant au moins un tuyau, au moins une botte, et au moins un registre, dans lequel au moins un élément parmi le tuyau, la botte et le registre est aménagé selon la revendication 1; et, de préférence, dans lequel chaque élément parmi le tuyau, la botte et le registre est aménagé selon la revendication 1.
